# EUROPÄISCHE PATENTSCHRIFT

(11) **EP 3 290 298 B1**
(45) Veröffentlichungstag und Bekanntmachung des Hinweises auf die Patenterteilung: **04.03.2020**
(21) Anmeldenummer: 17188087.5
(22) Anmeldetag: 28.08.2017
(51) Int. Cl.: B62D 7/18, B60G 3/20

(54) **NUTZFAHRZEUG-EINZELRADAUFHÄNGUNG MIT MONOLITHISCHEM ACHSZAPFEN**
COMMERCIAL VEHICLE SINGLE WHEEL SUSPENSION WITH MONOLITHIC SPINDLE
SUSPENSION INDÉPENDANTE DE VÉHICULE UTILITAIRE DOTÉE D'UN AXE DE ROUE MONOLITHIQUE

(30) Priorität: 30.08.2016 DE 102016216277
(43) Veröffentlichungstag der Anmeldung: 07.03.2018
(73) Patentinhaber: TRIDEC BV, 5692 GA Son (NL)
(72) Erfinder: Dobbelaar, Jos, 5445 PA Landhorst (NL); Knook, Ruud, 5613 Eindhoven (NL)
(74) Vertreter: Ruttensperger Lachnit Trossin Gomoll

(56) Entgegenhaltungen:
- EP-A2- 0 365 516
- DE-U1-202012 004 661
- FR-A1- 2 526 721
- GB-A- 713 213

## Beschreibung

Die vorliegende Erfindung betrifft eine Nutzfahrzeug-Einzelradaufhängung für ein nicht-angetriebenes Rad gemäß dem Oberbegriff von Anspruch 1.

Eine derartige Radaufhängung für Nutzfahrzeuge ist aus der DE 20 2012 004 661 U1 oder aus der WO 2012/150860 A1 derselben Schutzrechtsfamilie bekannt.

Aus der GB 713213 A ist ein geschmiedeter Achsschenkelbolzen mit einstückig angeschmiedetem Lenker bekannt. Aus der FR 2526721 A ist eine Einzelradaufhängung mit einem hohlen Achsschenkelbolzen bekannt, der ein Rahmenteil der Radaufhängung durchsetzt und mit diesem verschweißt ist.

Derartige Einzelradaufhängungen für Nutzfahrzeuge werden vorrangig an nicht-angetriebenen Rädern von Nachlauffahrzeugen, insbesondere von Sattelaufliegern eingesetzt, um dort zwischen den Rädern einer Fahrzeugachse zusätzlichen nutzbaren Lade- und Stauraum zu schaffen. Die Einzelradaufhängung kann kompakt in vergleichsweise geringem Bauraum an das Nutzfahrzeug angebaut werden, sodass im Bereich zwischen zwei Radaufhängungen einer Fahrzeugachse eine Ladefläche unter Vergrößerung des nutzbaren Laderaums näher am Aufstandsuntergrund des Nutzfahrzeugs angeordnet werden kann, als dies bei Verwendung einer Starrachse möglich wäre.

Es soll jedoch nicht ausgeschlossen sein, dass die hier vorgestellte Nutzfahrzeug-Einzelradaufhängung auch an Zugfahrzeugen Anwendung findet.

Bei der bekannten Nutzfahrzeug-Einzelradaufhängung besteht der Nachteil, dass die Radnabe mit einem Achsschenkelstumpf, welcher aus dem Radnabenkörper auf der von der Radaufnahmeseite wegweisenden Lagerseite herausragt, nicht ohne weiteres mit einem Radträger der Radaufhängung verbindbar ist. Hier muss bisher ein Verbindungsstück, welches an einem Längsende zur Verbindung mit dem Achsschenkelstumpf ausgebildet ist, und an seinem anderen Ende zur Verbindung mit dem Radträger ausgebildet ist, mit dem Achsschenkelstumpf zu einem Achsschenkel verbunden werden und kann dann erst mit dem Radträger gekoppelt werden.

Hierdurch ergeben sich nicht nur unnötig viele und damit kostspielige Montageschritte. Es kann überdies ein gewisser Mindestabstand der Radnabe vom Radträger baulich nicht unterschritten werden, ohne dass die Möglichkeit der Herstellung einer Verbindung zwischen dem Achsschenkelstumpf und dem Verbindungsstück gefährdet würde. Darüber hinaus werden mit zusätzlichen Fügeflächen mögliche Fehlerquellen in das Gesamtsystem "Radaufhängung" eingeführt.

Es ist daher Aufgabe der vorliegenden Erfindung, die eingangs genannte Nutzfahrzeug-Einzelradaufhängung im Lichte der oben genannten Nachteile zu verbessern.

Diese Aufgabe wird erfindungsgemäß durch eine Nutzfahrzeug-Einzelradaufhängung mit allen Merkmalen des Anspruchs 1 gelöst. Dabei ist der Achsschenkel als ein einstückiger fügenahtfreier Achsschenkelbolzen ausgebildet, welcher an seinem einen Ende eine Verbindungsformation aufweist, die mit dem Radträger verbunden ist, und welcher an seinem anderen Endbereich eine Lagerungsformation aufweist, an der die Radnabe drehbar gelagert ist.

Durch die Ausbildung des Achsschenkels als einstückiger fügenahtfreier Achsschenkel kann die Radnabe von Zulieferern zur Verbindung mit dem Radträger bereit erworben werden. Da mit der Radnabe bereits ein mit einer Verbindungsformation ausgestatteter Achsschenkelbolzen zugeliefert werden kann, kann der Gesamtsabstand zwischen dem Radträger und der Radnabe an der fertigen Einzelradaufhängung verkürzt werden. Am Beispiel eines Schwerlast-Sattelaufliegers kann hier der Abstand von einem der Radnabe nächstgelegenen Flächenabschnitt des Verbindungsbereichs des Radträgers mit dem Achsschenkelbolzen zu der vom Radträger wegweisenden Stirnseite der Radnabe bei ansonsten unveränderter Radnabe um 60 mm verkürzt werden. Hierdurch ergibt sich zusätzlich zum eingesparten Montageaufwand ein deutlich kürzerer Lenkrollhalbmesser, was sich fahrdynamisch positiv auswirkt. Die beim Abrollen des an die Radnabe angeflanschten Rades auf die Radaufhängung zurückwirkenden Kräfte können dadurch verringert werden.

Dies wirkt sich besonders bei lenkbaren Radnaben bzw. Rädern aus, jedoch profitieren auch nicht-lenkbare Radnaben bzw. Räder von dem insgesamt kürzeren Achsschenkelbolzen bzw. von der Annäherung der Radnabe an den Radträger, da es auch hier im Fahrbetrieb zu Kraftrückwirkungen auf die Radaufhängung kommt, die von der Auskraglänge der Radnabe vom Radträger abhängen.

Um den Achsschenkelbolzen monolithisch auszubilden, kann dieser gusstechnisch hergestellt sein. Zusätzlich oder alternativ kann der Achsschenkelbolzen geschmiedet sein. Gerade durch Schmieden wird eine Kaltverfestigung erzielt, die dem Achsschenkelbolzen vorteilhaft hohe Festigkeit verleiht. Dies soll jedoch nicht ausschließen, dass der Achsschenkelbolzen ganz oder teilweise durch spanende Bearbeitung hergestellt ist. Beispielsweise kann der Achsschenkelbolzen durch Drehen und Fräsen aus dem Vollen hergestellt sein.

Erfindungsgemäß wird eine besonders Gewicht und Bauraum sparende Verbindungsstruktur zur Verbindung der Verbindungsformation der Achsschenkelbolzens mit dem Radträger kann dadurch erreicht, dass der Radträger wenigstens im Bereich der Verbindung mit dem Achsschenkelbolzen rohrförmig ausgebildet ist und die Verbindungsformation den Radträger nur teilweise umgreift. Durch das Umgreifen kann eine große Verbindungsfläche oder -länge zwischen Radträger und Achsschenkelbolzen erreicht werden. Vorzugsweise kann der gesamte Radträger rohrförmig ausgebildet sein. An der Einzelradaufhängung ist vorzugsweise ein pneumatischer, hydropneumatischer oder hydraulischer Dämpfer vorgesehen, um Stoßrückwirkungen beim Abrollen zu dämpfen.

Der Radträger kann als Federbein ausgebildet sein und an seinem einen Längsende mit dem Fahrzeugkörper verbindbar ausgebildet sein, insbesondere dann, wenn das mit dem Fahrzeugkörper unmittelbar verbindbare Ende des Radträgers durch einen Dämpfer-Zylinder gebildet ist.

Der eingangs genannte Lenker ist an dem bei betriebsmäßiger Herrichtung der Nutzfahrzeug-Einzelradaufhängung dem Aufstandsuntergrund des die Radaufhängung tragenden Fahrzeugs näherliegenden Endbereich des Radträgers mit dem Radträger verbunden, bevorzugt durch ein Kugelgelenk, um möglichst viele Bewegungsfreiheitsgrade zwischen Radträger und dem genannten Lenker bereitzustellen.

Am seinem entgegengesetzten Längsendbereich kann der Radträger mit einem weiteren Lenker relativbeweglich verbunden sein, welcher an seinem vom Radträger fernliegenden Längsende - ebenso wie der erstgenannte Lenker - zur Kopplung mit dem Fahrzeugkörper ausgebildet ist. Der Radträger erstreckt sich dann wenigstens zwischen den beiden genannten Lenkern.

Zur Verringerung der Gesamtmasse der vorgestellten Einzelradaufhängung kann vorgesehen sein, dass der Achsschenkelbolzen über wenigstens einen Teil seiner Länge, vorzugsweise über seine gesamte Länge hohl ist.

Insbesondere für lange Sattelauflieger-Nachlauffahrzeuge, bei welchen Radachsen längs der Fahrzeuglängsachse (Rollachse) mit großer Entfernung vom Königszapfen angeordnet sind, ist es vorteilhaft, zur Verbesserung der Manövrierbarkeit eines mit einem solchen Sattelauflieger-Nachlauffahrzeug gebildeten Fahrzeugzuges die Räder lenkbar auszugestalten. Zu diesem Zweck kann gemäß einer Weiterbildung der vorliegenden Nutzfahrzeug-Einzelradaufhängung vorgesehen sein, dass der Radträger als lenkbarer Radträger relativ zu dem wenigstens einen Lenker um eine Lenkdrehachse drehbar mit diesem verbunden ist, wobei vom Radträger ein Spurstangenhebel auskragt. Der Spurstangenhebel kann über eine Spurstange mit einem Lenkgestänge, Lenkgetriebe oder einem Lenkaktuator verbunden sein, von welchem eine Lenkbewegung über die Spurstange und den Spurstangenhebel in den Radträger einleitbar ist.

Zur Minderung von Stößen, die beim Fahrbetrieb auf das Rad einwirken und von diesem über die Radaufhängung auf den Fahrzeugkörper übertragen werden, ist die Radaufhängung bevorzugt gefedert mit dem Fahrzeugkörper verbunden. Hierzu kann die Radaufhängung einen Luftfederträger, vorzugsweise mit einer Luftfeder, aufweisen, so dass der Radträger unter Zwischenanordnung einer Luftfeder mit dem Fahrzeugkörper verbindbar ist. Die Radaufhängung kann alternativ oder zusätzlich mit einer Feder anderen Typs gefedert sein. Anstelle der bevorzugten Luftfeder oder zusätzlich zu dieser kann der Radträger unter Zwischenanordnung einer hydraulischen oder/und mechanischen Feder mit dem Fahrzeugkörper verbindbar sein. Die mechanische Feder kann in an sich bekannter Weise als Schraubenfeder ausgebildet sein.

Da die vorliegende Erfindung insbesondere an Nachlauffahrzeugen von besonderem Interesse ist, betrifft die vorliegende Erfindung auch ein Nutz-Nachlauffahrzeug zur Kupplung mit einem Zugfahrzeug mit wenigstens zwei einander längs der Fahrzeug-Nickachse gegenüberliegenden Nutzfahrzeug-Einzelradaufhängungen, wie sie oben beschrieben sind. Es handelt sich dabei insbesondere um einen Sattelauflieger, wobei besonders bevorzugt der Raum zwischen zwei Rädern einer sich längs der Fahrzeug-Nickachse erstreckenden Fahrzeugachse wenigstens teilweise als Lade- oder Stauraum des Nachlauffahrzeugs genutzt ist.

Eine wie oben beschrieben ausgebildete Radnabe hat eine Radaufnahmeseite, an welche ein Rad anflanschbar ist, und hat eine der Radaufnahmeseite entgegengesetzte Lagerseite, auf welcher ein einstückiger, fügenahtfreier Achsschenkelbolzen aus der Radnabe herausragt. Der Achsschenkelbolzen weist an seinem der Radnabe fernen Längsende eine Verbindungsformation auf, welche zur unmittelbaren Verbindung mit einem Radträger ausgebildet ist.

Die vorliegende Erfindung wird nachfolgend anhand der beiliegenden Zeichnungen näher erläutert. Es stellt dar:
- Figur 1: eine perspektivische Ansicht der Nutzfahrzeug-Einzelradaufhängung der vorliegenden Erfindung und
- Figur 2: eine Schnittansicht derselben bei Betrachtung längs des in Nutzfahrzeuglängsrichtung weisenden Pfeils II in Figur 1, wobei die Schnittebene die Rohrmittelachse des rohrförmigen Radträgers enthält.

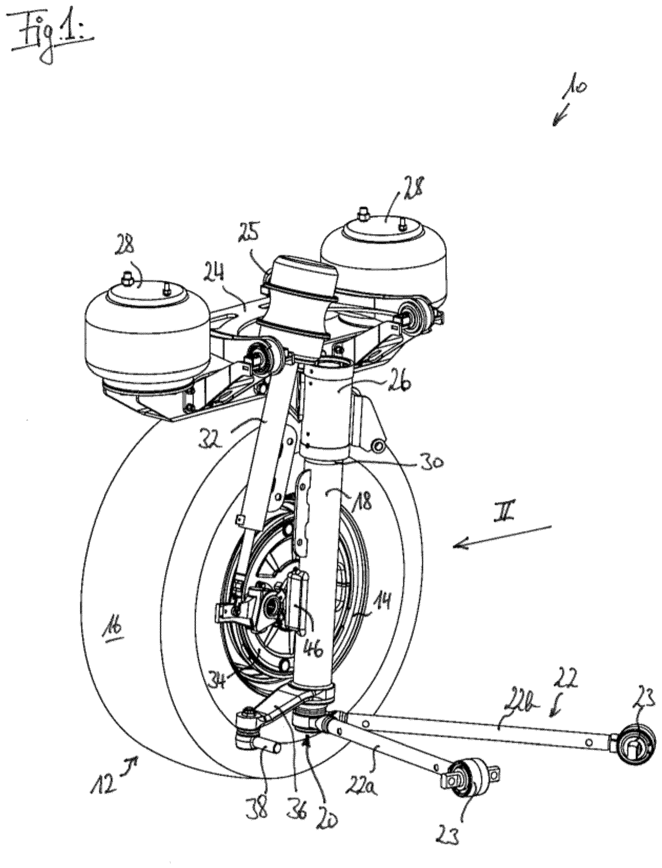

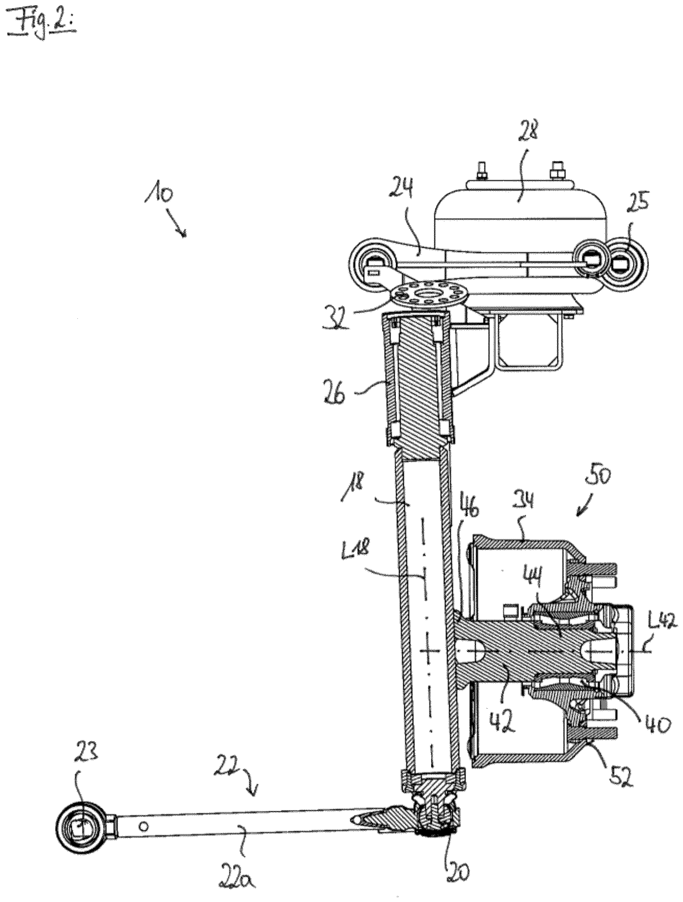

In den Figuren 1 und 2 ist eine erfindungsgemäße Ausführungsform einer Nutzfahrzeug-Einzelradaufhängung allgemein mit 10 bezeichnet. Diese dient dazu, ein ausschließlich in Figur 1 gezeigtes Rad 12, umfassend einen auf eine Felge 14 montierten Reifen 16 drehbar mit einem in den Figuren 1 und 2 nicht dargestellten Fahrzeugkörper zu verbinden.

Die Einzelradaufhängung 10 umfasst einen rohrförmigen Radträger 18, der an seinem dem Aufstandsuntergrund, auf dem das Rad 12 abrollt, näheren Längsende mittels eines Kugelgelenks 20 mit einem Lenker 22 verbunden. Der Lenker 22, welcher in an sich bekannter Weise ausgestaltet ist und im vorliegenden Beispiel zwei Lenkerarme 22a und 22b umfasst, ist an seinem vom Radträger 18 ferner liegenden Längsende zur relativbeweglichen Verbindung mit einem fahrzeugrahmen- bzw. einem fahrzeugkörperfesten Bauteil ausgebildet. Hierzu sind an den vom Radträger 18 fern liegenden Längsenden der Lenkerarme 22a und 22b jeweils Kopplungsformationen 23 vorgesehen.

An seinem entgegengesetzten, dem Aufstandsuntergrund ferner liegenden Längsende ist der Radträger 18 mit einem weiteren Lenker 24 verbunden, der an seinem dem Radträger ferner liegenden Längsende eine weitere Kopplungsformation 25 aufweist, welche ebenso wie die Kopplungsformationen 23 des Lenkers 22 zur relativschwenkbaren Kopplung mit einem fahrzeugrahmen- oder einem fahrzeugkörperfesten Bauteil ausgebildet ist. An seinem entgegengesetzten Längsende ist der Lenker 24 schwenkbar mit dem Radträger 18 verbunden. Der Radträger 18 weist starr mit ihm gekoppelt einen Federträger 26 auf, an welchem ein Paar Luftfedern 28 zwischen dem Federträger 26 und einem fahrzeugrahmen- oder fahrzeugkörperfesten Bauteil angeordnet sind.

Der Federträger 26 ist längs einer den rohrförmigen Radträger 18 umgebenden Schweißnaht 30 mit dem Radträger 18 verbunden.

Der Radträger 18 liegt im gezeigten Beispiel in Fahrzeugquerrichtung (Richtung der Nickachse bzw. Richtung der unten erläuterten Längsachse L42 des Achsschenkelbolzens 42 in dessen Geradeausfahrt-Stellung) zwischen den Kopplungsformationen 23 und 25, und zwar unabhängig von seinem Einfederungsgrad.

Weiterhin ist ein Bremsaktuator 32 gezeigt, welcher dazu ausgebildet ist, eine in einem Radnabengehäuse 34 vorgesehene Trommelbremse durch entsprechende Betätigung eines Bremspedals oder eines anderen Brems-Steuermittels zu betätigen.

Der Radträger 18 ist ein lenkbarer Radträger. Hierzu ist an ihm ein Spurstangenhebel 36 angeordnet, an welchem eine Spurstange 38 angelenkt ist. Die Spurstange 38 ist wiederum mit einem Lenkaktuator oder einem Lenkgetriebe oder einem Lenkgestänge verbunden, durch dessen Betätigung der Lenkwinkel des Rades 12 in an sich bekannter Weise veränderbar ist.

Das Radnabengehäuse 34 ist über ein Wälzlager 40 an einem Achsschenkelbolzen 42 drehbar gelagert. Der Achsschenkelbolzen 42 ist monolithisch-einstückig fügenahtfrei ausgebildet und erstreckt sich von einer Lagerungsformation 44, welche das das Radnabengehäuse 34 lagernde Wälzlager 40 trägt, bis zu einer Verbindungsformation 46, mit welcher der einstückige fügenahtfreie Achsschenkelbolzen 42 mit dem Radträger 18 verschweißt ist.

Die Verbindungsformation 46 umgibt den Radträger 18 um seinen halben Umfang, um eine ausreichend lange Fügeschweißnaht zwischen der Verbindungsformation 46 und dem Radträger 18 bereitstellen zu können, die auch betriebsmäßig auftretende hohe Spitzenlasten aushält.

Der Achsschenkelbolzen 42 ist im dargestellten Beispiel an seinen beiden Längsenden jeweils hohl ausgebildet. Er kann abweichend hiervon auch axial längere hohle Abschnitte aufweisen oder durchgehend hohl ausgebildet sein.

Bevorzugt schneidet die Längsachse L18 des rohrförmigen Radträgers 18, die auch Lenkdrehachse der Radaufhängung 10 ist, die Längsachse L42 des Achsschenkelbolzens 42 nicht unter einem rechten Winkel, sondern ist gegenüber einem rechten Winkel derart geneigt, dass der oberhalb des Achsschenkelbolzens 42 zwischen der Längsachse L18 des rohrförmigen Radträgers 18 und der Längsachse L42 des Achsschenkelbolzens 42 eingeschlossene Winkel größer als 90° ist und der unterhalb des Achsschenkelbolzens 42 eingeschlossene Winkel dementsprechend kleiner als 90° ist.

Die Radnabe 50, umfassend das Radnabengehäuse 34 mit dem es zur Drehung lagernden Achsschenkelbolzen 42 wird als Zulieferbaugruppe bezogen. Der Achsschenkelbolzen ragte bisher bei Radnaben des Standes der Technik lediglich als Achsschenkelstummel aus dem Radnabengehäuse 34 axial heraus und musste unter Zwischenanordnung eines Zwischenbauteils in Form eines Verbindungsstücks mit dem Radträger 18 verbunden werden. Hierzu war zum einen eine Fügeverbindung zwischen dem Verbindungsstück und dem Radträger 18 und eine weitere Fügeverbindung zwischen dem Verbindungsstück und dem Achsschenkelstummel herzustellen. Mit dem nun einstückig ausgebildeten Achsschenkelbolzen 42 fällt nicht nur ein Fügevorgang weg, sondern der Achsschenkelbolzen 42 kann insgesamt kürzer ausgebildet werden als der beschriebene Vorgänger im Stand der Technik. Ein Abstand der Radaufnahmeseite 52 der Radnabe 50 bzw. des Radnabengehäuses 34 bis beispielsweise zum Schnittpunkt der Längsachsen L18 und L42 des Radträgers 18 und des Achsschenkelbolzens 42 kann durch die einstückige Ausführung des Achsschenkelbolzens um bis zu 60 mm kürzer ausgeführt werden als in der mehrteiligen Ausführung des Standes der Technik, was den Lenkrollhalbmesser der Radaufhängung 10 bei Verwendung an einem Sattelauflieger um etwa 15 bis 20 % bezogen auf die größere Länge der mehrteiligen Ausführung des Achsschenkelbolzens im Stand der Technik verkürzt. Hierdurch ergeben sich sehr positive Auswirkungen auf Kraftrückwirkungen im Abrollbetrieb vom Rad 12 auf den Radträger 18 und damit auf das Nachlauffahrzeug, welches die erfindungsgemäße Einzelradaufhängung 10 trägt, insgesamt.

## Patentansprüche

1. Nutzfahrzeug-Einzelradaufhängung (10) für ein nicht-angetriebenes Rad (12), umfassend eine Radnabe (50), einen Radträger (18), einen die Radnabe (50) mit dem Radträger (18) verbindenden Achsschenkel (42) und wenigstens einen Lenker (22, 24), welcher einenends mit dem Radträger (18) relativ zu diesem beweglich verbunden ist und welcher andernends eine Kopplungsformation (23, 25) aufweist und so zur Kopplung mit einem Fahrzeugkörper ausgebildet ist,
**dadurch gekennzeichnet, dass** der Achsschenkel (42) als ein einstückiger fügenahtfreier Achsschenkelbolzen (42) ausgebildet ist, welcher an seinem einen Ende eine Verbindungsformation (46) aufweist, die mit dem Radträger (18) verbunden ist, und welcher an seinem anderen Endbereich eine Lagerungsformation (44) aufweist, an der die Radnabe (50) drehbar gelagert ist, wobei der Radträger (18) wenigstens im Bereich der Verbindung mit dem Achsschenkelbolzen (42) rohrförmig ausgebildet ist, und wobei die Verbindungsformation (46) den Radträger (18) nur teilweise umgreift.

2. Nutzfahrzeug-Einzelradaufhängung (10) nach Anspruch 1,
**dadurch gekennzeichnet, dass** der Achsschenkelbolzen (42) gegossen oder/und geschmiedet oder/und spanend bearbeitet ist.

3. Nutzfahrzeug-Einzelradaufhängung (10) nach einem der vorhergehenden Ansprüche,
**dadurch gekennzeichnet, dass** der Achsschenkelbolzen (42) über wenigstens einen Teil seiner Länge, vorzugsweise über seine gesamte Länge hohl ist.

4. Nutzfahrzeug-Einzelradaufhängung (10) nach einem der vorhergehenden Ansprüche,
**dadurch gekennzeichnet, dass** der Radträger (18) als lenkbarer Radträger (18) relativ zu dem wenigstens einen Lenker (22, 24) um eine Lenkdrehachse (L18) drehbar mit diesem verbunden ist, wobei vom Radträger (18) ein Spurstangenhebel (36) auskragt.

5. Nutzfahrzeug-Einzelradaufhängung (10) nach einem der vorhergehenden Ansprüche,
**dadurch gekennzeichnet, dass** die Radaufhängung (10) einen Federträger (26), bevorzugt Luftfederträger (26), vorzugsweise mit einer Feder (28), wie Luftfeder (28) oder/und hydraulischer Feder oder/und mechanischer Feder aufweist, so dass der Radträger (18) unter Zwischenanordnung der Feder, insbesondere Luftfeder (28), mit dem Fahrzeugkörper verbindbar ist.

6. Nutz-Nachlauffahrzeug zur Kupplung mit einem Zugfahrzeug, insbesondere Sattelauflieger mit wenigstens zwei einander längs der Fahrzeug-Nickachse gegenüberliegenden Nutzfahrzeug-Einzelradaufhängungen (10) nach einem der vorhergehenden Ansprüche.

## Claims

1. A commercial-vehicle independent suspension system (10) for a non-driven wheel (12), encompassing a wheel hub (50), a wheel carrier (18), a knuckle (42) connecting the wheel hub (50) to the wheel carrier (18), and at least one control link (22, 24) that is connected at one end to the wheel carrier (18) movably relative thereto, and at the other end comprises a coupling configuration (23, 25) and is thereby embodied for coupling to a vehicle body,
**characterized in that** the knuckle (42) is embodied as a one-piece, joining-seam-free knuckle pin (42) that comprises at its one end a connecting configuration (46) that is connected to the wheel carrier (18), and comprises at its other end region a bearing configuration (44) on which the wheel hub (50) is rotatably mounted,
the wheel carrier (18) being embodied tubularly at least in the region of the connection to the knuckle pin (42), and the connecting configuration (46) wrapping only partly around the wheel carrier (18).

2. The commercial-vehicle independent suspension system (10) according to Claim 1,
**characterized in that** the knuckle pin (42) is cast and/or forged and/or machined by material removal.

3. The commercial-vehicle independent suspension system (10) according to one of the preceding claims,
**characterized in that** the knuckle pin (42) is hollow over at least part of its length, preferably over its entire length.

4. The commercial-vehicle independent suspension system (10) according to one of the preceding claims,
**characterized in that** the wheel carrier (18), constituting a steerable wheel carrier (18), is connected to the at least one control link (22, 24) rotatably relative thereto around a control link rotation axis (L18), a tie rod lever (36) protruding from the wheel carrier (18).

5. The commercial-vehicle independent suspension system (10) according to one of the preceding claims,
**characterized in that** the suspension system (10) comprises a spring carrier (26), preferably a pneumatic spring carrier (26), by preference having a spring (28) such as a pneumatic spring (28) and/or hydraulic spring and/or mechanical spring, so that the wheel carrier (18) is connectable to the vehicle body with interposition of the spring, in particular pneumatic spring (28).

6. A commercial towed vehicle for coupling to a towing vehicle, in particular a semitrailer, having at least two commercial-vehicle independent suspension systems (10), located oppositely from one another along the vehicle pitch axis, according to the preceding claims.

## Revendications

1. Suspension de roue indépendante de véhicule utilitaire (10) pour une roue non entraînée (12), comprenant un moyeu de roue (50), un support de roue (18), une fusée d'essieu (42) reliant le moyeu de roue (50) au support de roue (18) et au moins un guidon (22, 24) qui, à une extrémité, est relié au support de roue (18) de manière mobile relativement à celui-ci et qui, à l'autre extrémité, présente une formation d'accouplement (23, 25) et est ainsi adapté pour un accouplement avec un corps de véhicule,
**caractérisée en ce que** la fusée d'essieu (42) se présente sous la forme d'un pivot d'essieu (42) monobloc, sans joint, qui présente à une extrémité une formation de liaison (46) reliée au support de roue (18) et qui présente à son autre extrémité une formation de palier (44), sur lequel le moyeu de roue (50) est monté rotatif, le support de roue (18) étant tubulaire au moins dans la zone de la liaison au pivot d'essieu (42), et la formation de liaison (46) entourant seulement partiellement le support de roue (18).

2. Suspension de roue indépendante de véhicule utilitaire (10) selon la revendication 1,
**caractérisée en ce que** le pivot d'essieu (42) est coulé ou/et forgé ou/et usiné.

3. Suspension de roue indépendante de véhicule utilitaire (10) selon l'une des revendications précédentes,
**caractérisée en ce que** le pivot d'essieu (42) est creux sur au moins une partie de sa longueur, de préférence sur toute sa longueur.

4. Suspension de roue indépendante de véhicule utilitaire (10) selon l'une des revendications précédentes, **caractérisée en ce que** le support de roue (18), en tant que support de roue dirigeable (18), est relié de manière pivotable autour d'un axe de rotation (L 18) par rapport audit au moins un guidon (22, 24), un levier d'accouplement (36) faisant saillie du support de roue (18).

5. Suspension de roue indépendante de véhicule utilitaire (10),
**caractérisée en ce que** la suspension de roue (10) présente un support de ressort (26), de préférence un support de ressort pneumatique (26), de préférence avec un ressort (28), tel que ressort pneumatique (28) et/ou ressort hydraulique et/ou ressort mécanique, de sorte que le support de roue (18) peut être relié au corps de véhicule par un dispositif intermédiaire du ressort, en particulier ressort pneumatique (28).

6. Véhicule utilitaire tracté destiné à être accouplé à un véhicule tracteur, en particulier à une semi-remorque, comportant au moins deux suspensions de roues indépendantes de véhicule utilitaire (10) selon l'une des revendications précédentes qui sont opposées l'une à l'autre le long de l'axe de tangage du véhicule.
